# EUROPEAN PATENT SPECIFICATION

(11) **EP 1 687 963 B1**
(45) Date of publication and mention of the grant of the patent: **23.02.2011**
(21) Application number: 04787137.1
(22) Date of filing: 14.09.2004
(51) Int. Cl.: H04M 1/656

(54) **WIRELESS COMMUNICATION UNIT AND A METHOD OF OPERATION THEREOF**
DRAHTLOSE KOMMUNIKATIONSEINHEIT UND BETRIEBSVERFAHREN DAFÜR
UNITE DE COMMUNICATION SANS FIL ET SON PROCEDE DE FONCTIONNEMENT

(30) Priority: 21.11.2003 GB 0327180
(43) Date of publication of application: 09.08.2006
(73) Proprietor: MOTOROLA, INC., Schaumburg, IL 60196 (US)
(72) Inventor: HILDING-SVENDSEN, Peter William, DK-2100 Copenhagen (DK)
(74) Representative: McCormack, Derek James
(86) International application number: PCT/EP2004/052165
(87) International publication number: WO 2005/055571

(56) References cited:
- US-A- 4 805 217
- US-A- 5 126 982
- US-A1- 2001 000 540
- US-A1- 2002 176 546

## Description

### Field of the Invention

The present invention relates to digital communication systems, in general. In particular, the present invention relates to portable or mobile two-way digital wireless communication units for use in a networked digital radio communication system that is operable to support simplex calls.

### Background of the Invention

Wireless communication units in digital communication systems are used by different types of public services like police, fire brigades, medical emergency, etc. Most of these services rely on accurate and timely information. Delays in receiving and understanding of messages may lead to catastrophic consequences.

On the other hand these services quite often operate in very hostile environments These hostile environments may, in different situations,7 cause the message not to be correctly understood. One such situation can be listening with shared attention, while driving with high speed in a heavy urban traffic, which occurs very often in the case of fire, police action or when an emergency is called. Another situation when reception of a message by a human person may be heavily affected by the surroundings is listening to the message in the presence of loud background noise, e.g. when a truck passes by. There are many other situations when verbal information played by an audio output of the wireless communication unit is strongly effected by the environmental conditions.

As the information is important and can save people's life the message must be somehow repeated for the user of the radio.

In solutions known in the art the user can request the repetition of the message when its transmission is over. However this will cause some delay as the originator of the message (e.g. dispatch) must complete the message before its repetition.
In US patent application US20030078083 A1 a wireless communication unit is presented which allows for storing received messages in a memory and their later replaying.

According to the US patent application the received message is stored in a digital format in a memory and can be replayed when the message transmission is completed.

Both these solutions have some drawbacks and the most important is that the listener must wait until the end of the transmission. This may lead to significant delays especially when the reception of the message was disturbed at the beginning of the transmission. This means that couple of vital seconds will be lost. Similarly by asking a dispatcher to repeat the message makes that couple of seconds are lost.

US 2001/00540A describes a method which includes receiving an audio stream, recording the audio stream on a storage medium such as a random access storage unit and retrieving a portion of the audio stream from the storage medium whilst continuing to record the audio stream. In this way, the record and playback functions are decoupled from one another. Using the method, a user may begin to listen to recorded music prior to the music being completely recorded. The reference discloses that the audio stream received and recorded may be from a radio broadcast, cable or satellite signals or another playback device.

US 2002/176546A describes a system in which a telephone handset dynamically buffers an audio signal. The signal is continuously recorded. The recorded signal can be played back after an earpiece has been detected to be removed from the ear of a user and re-applied with the ear of a user once more in place using a time-compressed version of the recorded audio signal until the playback signal is resynchronised with the real-time audio signal.

### Summary of the Invention

There is a need for a wireless communication unit for use in a digital radio communication system and for a method of replaying a message in a wireless communication unit, which alleviate or overcome the disadvantages of the prior art.

According to a first aspect of the present invention there is thus provided a wireless communication unit as claimed in claim 1.

According to a second aspect of the present invention there is provided a method of operation as claimed in claim 6.

Further aspects of the present invention are provided in the dependent claims.

The present invention beneficially allows for:
- reducing a number of requests for repetition of the messages, which in turn reduces a network traffic;
- reducing response time of emergency services;
- relieving the dispatcher from repeating messages.

### Brief description of the drawings

The present invention will be understood and appreciated more fully from the following detailed description taken in conjunction with the drawings in which:
FIG. 1 is a block diagram illustration of a wireless communication unit in accordance with a first embodiment of the present invention,
FIG. 2 is a block diagram illustration of a wireless communication unit in accordance with a second embodiment of the present invention,
FIG. 3 is a block diagram illustration of a wireless communication unit in accordance with a third embodiment of the present invention,
FIG. 4 is a block diagram illustration of a wireless communication unit in accordance with a fourth embodiment of the present invention,
FIG. 5 is a diagram illustrating a method of replaying a message in a wireless communication unit in one embodiment of the present invention.

### Detailed description of an embodiment of the invention

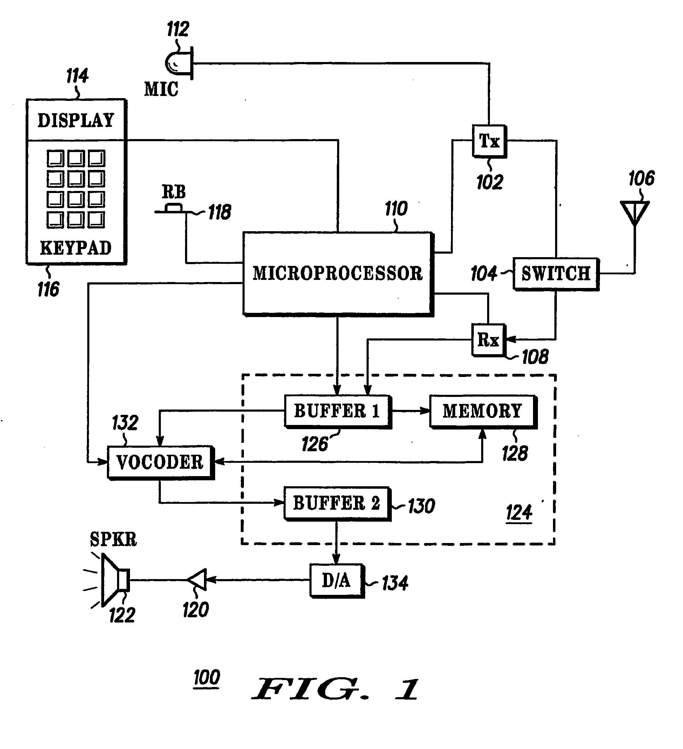

Referring to Fig. 1 one embodiment of a wireless communication unit in accordance with the present invention is presented.

The wireless communication unit of Fig. 1 may be either a portable or a mobile digital radio. The wireless communication unit 100 comprises a microphone 112 which provides a signal for transmission by transmission circuit 102. Transmission circuit 102 transmits via Radio Frequency (RF) switch 104 and antenna 106. The wireless communication unit 100 also has a microprocessor 110 and a keypad 116 and a display 114. Voice activation of the radio, or other means of interaction with a user, may also be implemented. Signals received by the radio are routed by the RF switch 104 to a receiving circuit 108. The received signals are routed from the receiving circuit 108 to microprocessor 110 and through means for storing messages 124 and a vocoder 132 and a digital-to-analog (D/A) converter 134 to an audio processing circuitry 120 and 122. A dedicated replay switch 118 is also connected to said microprocessor 110. Said means for storing messages 124 comprises a first buffer 126 for storing compressed speech data and a second buffer 130 for storing decompressed speech data as well as a memory 128 for storing recorded messages.

In operation a message is received by the antenna 106 and via the RF switch 104 is directed to the receiving circuit 108. When the reception of the message commences, received compressed speech data blocks are placed in the first buffer 126 from where, after a first predefined delay, they are taken for decompression in the vocoder 132. The decompressed speech data are placed in the second buffer 130 from where, after a second predefined delay, they are taken for construction of an analogue speech signal in the D/A converter 134. The predefined delays are to ensure that no gaps are introduced in the reproduced speech. The compressed speech data blocks from the first buffer are also copied to the memory 128 where the whole message is recorded. A block of compressed speech data or a decompressed speech data item is never processed twice, except for the case of mitigating the effect of a missing data block.

When the replay switch 118 is activated the microprocessor 110 closes the transfer of compressed speech data from the first buffer 126 to the vocoder 132 while maintaining transfer of said compressed speech data from the first buffer 126 to the memory 128. Simultaneously the microprocessor 110 instructs the vocoder 132 to start immediately processing the compressed speech data of the message stored in the memory 128. Following the instruction, the vocoder 132, starts processing the compressed speech data taken from said memory 128 starting from the message beginning stored therein. After decompression the speech data are transferred to the second buffer 130 and later to the D/A converter 134. The D/A converter's output is forwarded to the audio processing circuitry 120 and 122 and the messages is replayed in the speaker 122 while the remaining portion of the message still being received by the receiving circuit 108 and recorded in the memory 128.

The message received by the wireless communication unit is a simplex message.

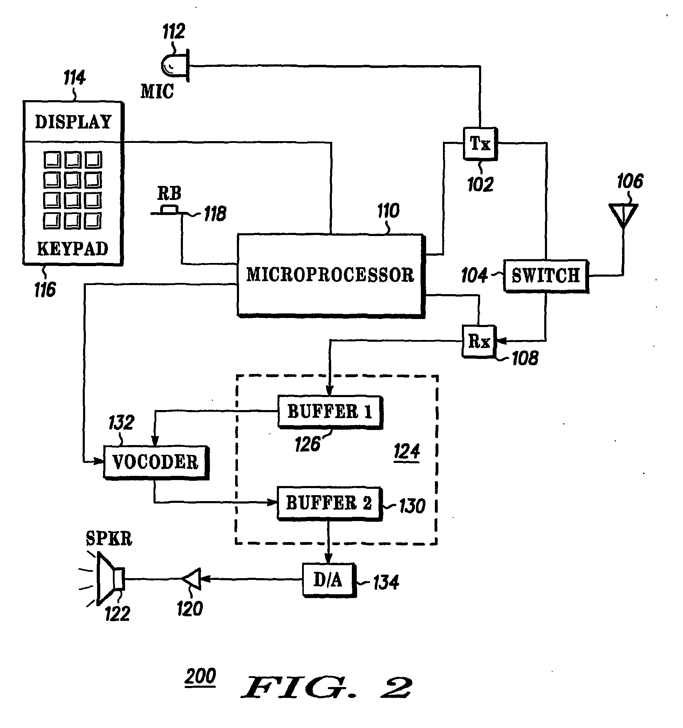

Referring to FIG. 2 a second embodiment of a wireless communication unit in accordance with the present invention is shown.

In this embodiment the means for storing messages 124 contains only the first buffer 126 and the second buffer 130.

In operation a message is received by the antenna 106 and via the RF switch 104 is directed to the receiving circuit 108. When the reception of a message commence, received compressed speech data blocks arc placed in the first buffer 126 from where, after a first predefined delay, they are taken for decompression in the vocoder 132. The decompressed speech data are then placed in the second buffer 130 from where, after a second predefined delay, they are taken for construction of an analogue speech signal in the DIA converter 134. The predefined delays are to ensure that no gaps are introduced in the reproduced speech. The compressed speech data blocks are stored in the first buffer 126. A block of compressed speech data or a decompressed speech data item is never processed twice, except for the case of mitigating the effect of a missing data block.

In operation a message is received by the antenna 106 and via the RF switch 104 is directed to the receiving circuit 108. When the reception of a message commences, received compressed speech data blocks are placed in the first buffer 126 from where, after a first predefined delay, they are taken for decompression in the vocoder 132. The decompressed speech data are then placed in the second buffer 130 from where, after a second predefined delay, they are taken for construction of an analogue speech signal in the D/A converter 134. The predefined delays are to ensure that no gaps are introduced in the reproduced speech. The compressed speech data blocks are stored in the first buffer 126. A block of compressed speech data or a decompressed speech data item is never processed twice, except for the case of mitigating the effect of a missing data block.

When the replay switch 118 is activated the microprocessor 110 instructs the vocoder 132 to stop processing the message and to start immediately processing the compressed speech data of the message stored in the first buffer 126 starting from the message beginning. Following the instruction, the vocoder 132, starts processing the compressed speech data taken from said first buffer 126. After decompression the speech data are transferred to the second buffer 130 and later to the D/A converter 134. The D/A converter's output is forwarded to the audio processing circuitry 120 and 122 and the message is replayed in the speaker 122 while the remaining portion of the message still being received by the receiving circuit 108 and recorded in the first buffer 126. As in this embodiment the message is recorded in the first buffer 126 the size of the first buffer 126 must be large enough to store minutes of voice data.

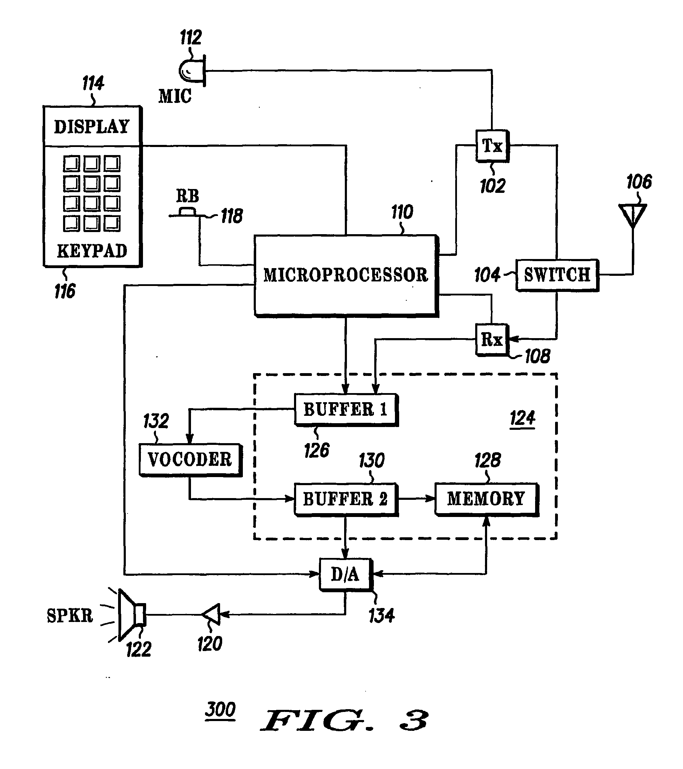

Referring to FIG. 3 a third embodiment of a wireless communication unit in accordance with the present invention is shown. The means for storing messages 124 contains the first buffer 126, the memory 128 and the second buffer 130. The memory 128 is connected to the second buffer 130 and to the D/A converter 134.

In operation the process of playing the message is performed in the same way as in the first embodiment however decompressed speech data blocks from the second buffer 130 are copied to the memory 128, where the whole message is recorded.

When the replay switch 118 is activated the microprocessor 110 closes the transfer of the decompressed speech data from the second buffer 130 to the D/A converter while maintaining transfer of said decompressed speech data from the second buffer 130 to the memory 128. Simultaneously the microprocessor 110 instructs the D/A converter 134 to start immediately processing the decompressed speech data of the message stored in the memory 128. Following the instruction, the D/A converter 134, starts processing the decompressed speech data taken from said memory 128 starting from the beginning the message stored therein. The D/A converter's output is forwarded to the audio processing circuitry 120 and 122 and the message is replayed in the speaker 122 while the remaining portion of the message still being received by the receiving circuit 108 and recorded in the memory 128.

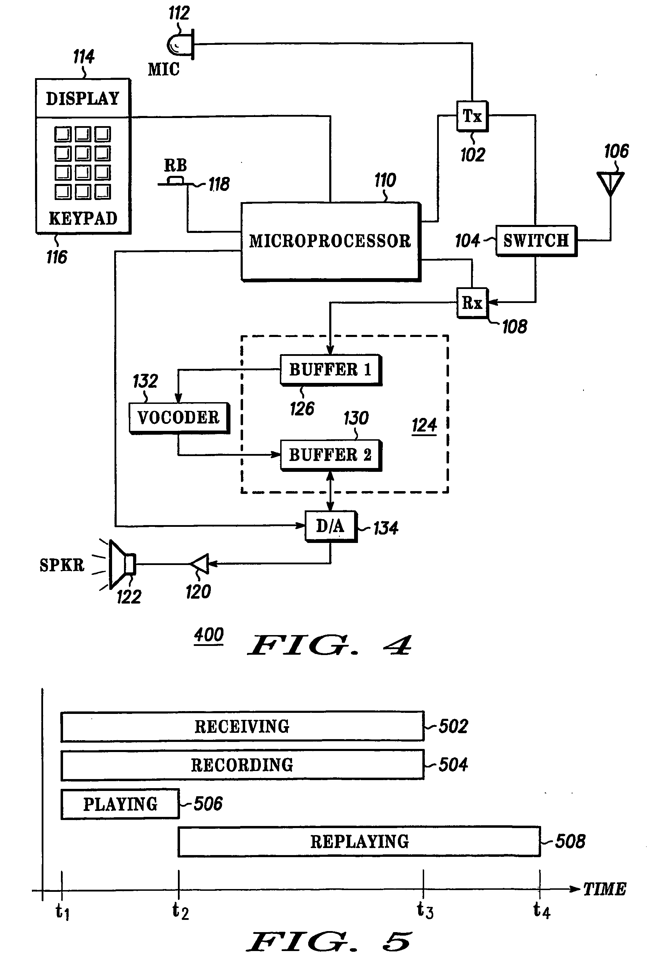

Referring to FIG. 4 a fourth embodiment of a wireless communication unit in accordance with the present invention is shown.

In this embodiment the means for storing messages 124 contains only the first buffer 126 and the second buffer 130.

In operation the process of playing the message is performed in the same way as in the second embodiment, however the decompressed speech data blocks are stored in the second buffer 130.

When the replay switch 118 is activated the microprocessor 110 instructs the D/A converter 134 to stop processing the message and to start immediately processing the decompressed speech data of the message stored in the second buffer 130 starting from the message beginning. Following the instruction, the D/A converter 134, starts processing the decompressed speech data taken from the second buffer 130. The D/A converter's output is forwarded to the audio processing circuitry 120 and 122 and the message is replayed in the speaker 122 while the remaining portion of the message still being received by the receiving circuit 108 and recorded in the second bluffer 130. As in this embodiment the message is recorded in the second buffer 130 the size of the second buffer 130 must be large enough to store minutes of voice data.

In one embodiment the microprocessor 110 of the wireless communication unit 100, 200, 300, 400 is adapted to initiate a transmission of a notification that the replay function is activated. This indicates that reply from this wireless communication unit will be delayed. It is important for the emergency services when procedures must be observed. Without such notification the dispatcher in e.g. police dispatch centre would not be aware why the other party is not responding. The notification can be transmitted after the receiving of the message is completed.

Any new incoming call may be signalled when the replay is active.

Referring to FIG. 5 one embodiment of a method of replaying a message in a wireless communication unit in accordance with the present invention is shown. The wireless communication unit starts receiving 502 the message at a time marked as t₁. At the time t₁ recording 504, in the means for storing messages 124, and playing 506 of the message, by the audio processing circuitry 120, 122, also starts. The processes of receiving 502 and recording 504 continues until the end of transmission of the message at a time marked as t₃. If a user of the wireless communication unit stops playing 506 the message at a time t₂ the microprocessor 110 controlling the wireless communication unit initiates replaying of the message from the recorded 504 data. It is important to note that this user's action does not stop receiving 502 and recording 504 of the message. The replaying 508 starts at the time t₂ and lasts until a time t₄. This causes the total delay of delivering the message to the user of the wireless communication unit is only t₂-t₁. And this can be significantly shorter than for solutions known in the art. Assuming that the message lasts 15 seconds and was interrupted after 3rd second the total delay in delivering the message will be 3 seconds only and not 15, which is very important for emergency services. For those skilled in the art it is clear that there will be a small delay between terminating of playing the message and replaying the message from the means for storing messages 124. The delay is caused by a response time of electronic circuits and in particular by an access time to the means for storing messages 124. However modern memory modules are very fast and offer very short access time measured in a range of milliseconds, thus for the sake of clarity this small delay was not depicted on Fig. 5. Respectively the processing time of the vocoder for decompression of the first block of stored compressed speech is in an order of few milliseconds. These two components of a delay are insignificant compared to the message duration.

The wireless communication unit in the above described embodiments may be a TETRA radio or an APCO 25 radio or an IDEN radio.

## Claims

1. A portable or mobile two-way wireless communication unit (100, 200, 300, 400) for use in a networked digital radio communication system that is operable to support simplex calls, said portable or mobile two-way wireless communication unit comprising:
a transmitter for signal transmission (102, 104, 106);
a receiver for signal reception (108, 104, 106);
a vocoder (132) for decompressing received compressed speech data;
a digital-to-analog converter (134) for conversion of decompressed speech data into an analog speech signal;
a microprocessor (110); and
means (124) for storing messages received by the receiver; and
wherein said microprocessor (110), when activated, is adapted to stop playing a currently received messages and to start replaying the message stored in said means (124) for storing messages;
and wherein the portable or mobile two-way wireless communication unit (100, 200, 300, 400):
(i) is operable to receive and record a message, during a simplex call, the message comprising speech data;
(ii) includes a dedicated replay switch (118), which, when operated by a user, activates the microprocessor (110) to stop playing (506) a currently received message that is being played in real time, and to begin replaying (508) the message from its start, using stored speech data from the means (124) for storing whilst still recording the message; and
(iii) is operable to continue replaying (508), after a time (t₃) when receiving (502) and recording (504) of the message ends, until a time (t₄), when the entire message has been replayed.

2. The portable or mobile two-way wireless communication unit (100, 200, 300, 400) according to claim 1, wherein the means for storing messages comprises:
a first buffer (126) for buffering data which is compressed speech data, prior to delivery to the vocoder (132);
a second buffer (130) for buffering data which is decompressed speech data del ivered from the vocoder (132), prior to delivery to the digital-to-analog converter (134); and
a memory (128) connected to the first or second buffer and operable to record the received message.

3. The portable or mobile two-way wireless communication unit (100, 200, 300, 400) according to any one of the preceding claims, wherein:
the microprocessor (110) is adapted to initiate a transmission of a notification that the replay is activated; and
the unit (100, 200, 300, 400) is adapted to send the notification to a sender of the received message, to indicate to the sender that any response from the unit (100, 200, 300, 400) will he delayed.

4. The portable or mobile two-way wireless communication unit (100, 200, 300, 400) according to claim 3, wherein:
the unit (100, 200, 300, 400) is adapted to send the notification message after completion of reception of the message.

5. The portable or mobile two-way wireless communication unit (100, 200, 300, 400) according to anyone of the preceding claims, wherein:
the un it (100, 200, 300, 400) is a TETRA radio, or an APCO 25 radio, or an IDEN radio.

6. A method of operation of a portable or mobile two-way wireless communication unit (100, 200, 300, 400) in a networked digital radio communication system that is operable to support simplex calls, which includes;
receiving a message comprising speech data, by a receiver of the portable or mobile two-way wireless communication unit (100, 200, 300, 400);
recording the message in a means (124) for storing messages; and
activating a microprocessor (110) of the portable or mobile two-way wireless communication unit (100, 200, 300, 400) to stop playing the currently received message and to start replaying the message stored in said means (124) for storing messages;
wherein:
(i) the portable or mobile two-way wireless communication unit (100, 200, 300, 400) receives and records a message, during a simplex call, the message comprising speech data, and plays (506) the message in real time;
(ii) a user operates a dedicated replay switch (118) to activate the microprocessor (110) to stop the unit (100, 200, 300, 400) playing (506) the message in real time, and to begin replaying (508) the message using stored speech data recorded by the means (124) for storing whilst still recording the message;
(iii) the portable or mobile two-way wireless communication unit (100, 200, 300, 400) continues replaying (508), after a time (t₃) when receiving (502) and recording (504) of the message ends, until a time (t₄), when the entire message has been replayed.

7. The method according to claim 6, including:
the microprocessor (110) of the portable or mobile two-way wireless communication unit (100, 200, 300, 400) initiating a transmission of a notification that the replay is activated; and
the unit (100, 200, 300, 400) sending the notification to a sender of the received message to indicate to the sender that any response from the unit (100, 200, 300, 400) will be delayed.

8. The method according to claim 7, including:
the portable or mobile two-way wireless communication unit (100, 200, 300, 400) sending the notification message after completion of reception of the message.

9. The method according to claim 7 or claim 8, wherein:
the sender of the message and the receiver of the notification is in a police dispatch centre.

10. The method according to anyone of claims 6 to 9, including:
any new incoming call being signalled when the replay is active.

## Patentansprüche

1. Tragbare oder mobile Zweiwege-Drahtloskommunikationseinheit (100, 200, 300, 400) zur Verwendung in einem vernetzten digitalen Funkkommunikationssystem, welches derart betreibbar ist, dass es Simplex-Anrufe unterstützt, wobei die tragbare oder mobile Zweiwege-Drahtloskommunikationseinheit folgendes umfasst:
einen Sender zur Signalübertragung (102, 104, 106);
einen Empfänger zum Signalempfang (108, 104, 106);
einen Vocoder (132) zum Entkomprimieren empfangener komprimierter Sprachdaten;
einen Digital-Analog-Wandler (134) zur Umwandlung entkomprimierter Sprachdaten in ein analoges Sprachsignal;
einen Mikroprozessor (110); und
Mittel (124) zum Speichern von Nachrichten, die von dem Empfänger empfangen wurden; und
wobei der Mikroprozessor (110), wenn er aktiviert ist, ausgelegt ist, die Wiedergabe einer aktuell empfangenen Nachricht zu stoppen und mit der Wiedergabe der in den Mitteln (124) zum Speichern von Nachrichten gespeicherten Nachricht zu beginnen;
und wobei die tragbare oder mobile Zweiwege-Drahtloskommunikationseinheit (100, 200, 300, 400):
(i) derart betreibbar ist, dass sie während eines Simplex-Anrufs eine Nachricht empfängt und aufzeichnet, wobei die Nachricht Sprachdaten enthält;
(ii) einen zweckbestimmen Wiedergabeschalter (118) aufweist, welcher, wenn er von einem Nutzer betätigt wird, den Mikroprozessor (110) aktiviert, so dass dieser die Wiedergabe (506) einer aktuell empfangenen Nachricht, die in Echtzeit wiedergegeben wird, stoppt und damit beginnt (508), die Nachricht von ihrem Anfang an wiederzugeben, unter Verwendung gespeicherter Sprachdaten von den Mitteln (124) zum Speichern, während die Nachricht weiterhin aufgenommen wird; und
(iii) derart betreibbar ist, dass sie nach einer Zeit (t₃), zu der der Empfang (502) und die Wiedergabe (508) der Nachricht endet, bis zu einer Zeit (t₄), zu der die gesamte Nachricht wiedergegeben worden ist, die Wiedergabe (508) fortsetzt.

2. Tragbare oder mobile Zweiwege-Drahtloskommunikationseinheit (100, 200, 300, 400) nach Anspruch 1, wobei die Mittel zum Speichern von Nachrichten umfassen:
einen ersten Zwischenspeicher (126) zum Zwischenspeichern von Daten, die komprimierte Sprachdaten sind, vor der Lieferung an den Vocoder (132);
einen zweiten Zwischenspeicher (130) zum Zwischenspeichern von Daten, die von dem Vocoder (132) gelieferte dekomprimierte Sprachdaten sind, vor der Lierfung an den Digital-Analog-Wandler (134); und
einen Speicher (128), der mit dem ersten oder zweiten Zwischenspeicher verbunden ist und derart betreibbar ist, dass er die empfangene Nachricht aufzeichnet.

3. Tragbare oder mobile Zweiwege-Drahtloskommunikationseinheit (100, 200, 300, 400) nach einem der vorherigen Ansprüche, wobei:
der Mikroprozessor (110) dazu ausgelegt ist, eine Übertragung einer Meldung, dass die Wiedergabe aktiviert ist, einzuleiten; und
die Einheit (100, 200, 300, 400) dazu ausgelegt ist, die Meldung einem Absender der empfangenen Nachricht zu senden, um dem Absender anzuzeigen, dass jegliche Antwort von der Einheit (100, 200, 300, 400) verzögert sein wird.

4. Tragbare oder mobile Zweiwege-Drahtloskommunikationseinheit (100, 200, 300, 400) nach Anspruch 3, wobei:
die Einheit (100, 200, 300, 400) dazu ausgelegt ist, die Meldungsnachricht nach Abschluss des Empfangs der Nachricht zu senden.

5. Tragbare oder mobile Zweiwege-Drahtloskommunikationseinheit (100, 200, 300, 400) nach einem der vorherigen Ansprüche, wobei:
die Einheit (100, 200, 300, 400) eine TETRA-Funkeinrichtung oder eine APCO-25-Funkeinrichtung oder eine IDEN-Funkeinrichtung ist.

6. Verfahren zum Betreiben einer tragbaren oder mobilen Zweiwege-Drahtloskommunikationseinheit (100, 200, 300, 400) in einem vernetzten digitalen Funkkommunikationssystem, das derart betreibbar ist, dass es Simplex-Anrufe unterstützt, umfassend:
Empfangen einer Nachricht mit Sprachdaten, durch einen Empfänger der tragbaren oder mobilen Zweiwege-Drahtloskommunikationseinheit (100, 200, 300, 400);
Aufzeichnen der Nachricht in Mitteln (124) zum Speichern von Nachrichten; und
Aktivieren eines Mikroprozessors (110) der tragbaren oder mobilen Zweiwege-Drahtloskommunikationseinheit (100, 200, 300, 400), so dass er die Wiedergabe der aktuell empfangenen Nachricht stoppt und mit der Wiedergabe der in den Mitteln (124) zum Speichern von Nachrichten gespeicherten Nachricht beginnt;
wobei:
(i) die tragbare oder mobile Zweiwege-Drahtloskommunikationseinheit (100, 200, 300, 400) während eines Simplex-Anrufs eine Nachricht, die Sprachdaten enthält, empfängt und aufzeichnet und die Nachricht in Echtzeit wiedergibt (506);
(ii) ein Nutzer einen zweckbestimmten Wiedergabeschalter (118) betätigt, so dass der Mikroprozessor (110) aktiviert wird, so dass die Einheit (100, 200, 300, 400) die Echtzeit-Wiedergabe (506) der Nachricht stoppt und mit der Wiedergabe (508) der Nachricht beginnt, unter Verwendung gespeicherter Sprachdaten, die von den Mitteln (124) zum Speichern aufgezeichnet wurden, während die Nachricht weiterhin aufgezeichnet wird;
(iii) die tragbare oder mobile Zweiwege-Drahtloskommunikationseinheit (100, 200, 300, 400) nach einer Zeit (t₃), zu der der Empfang (502) und das Aufzeichnen (504) der Nachricht endet, bis zu einer Zeit (t₄), zu der die gesamte Nachricht wiedergegeben worden ist, die Wiedergabe (508) fortsetzt.

7. Verfahren nach Anspruch 6, wobei:
der Mikroprozessor (110) der tragbaren oder mobilen Zweiwege-Drahtloskommunikationseinheit (100, 200, 300, 400) eine Übertragung einer Meldung, dass die Wiedergabe aktiviert ist, einleitet; und
die Einheit (100, 200, 300, 400) einem Absender der empfangenen Nachricht eine Meldung sendet, die dem Absender anzeigt, dass jegliche Antwort von der Einheit (100, 200, 300, 400) verzögert sein wird.

8. Verfahren nach Anspruch 7, wobei:
die tragbare oder mobile Zweiwege-Drahtloskommunikationseinheit (100, 200, 300, 400) die Meldungsnachricht nach Abschluss des Empfangs der Nachricht sendet.

9. Verfahren nach 7 oder Anspruch 8, wobei:
sich der Absender der Nachricht und der Empfänger der Meldung in einer Polizeieinsatzzentrale befindet.

10. Verfahren gemäß einem der Ansprüche 6 bis 9, wobei:
jeder neue eingehende Anruf gemeldet wird, wenn die Wiedergabe aktiv ist.

## Revendications

1. Unité de communication sans fil bidirectionnelle portable ou mobile (100, 200, 300, 400) pour une utilisation dans un système de réseau de radiocommunication numérique apte à prendre en charge des appels simplex, ladite unité de communication sans fil bidirectionnelle portable ou mobile comprenant :
un émetteur pour la transmission de signaux (102, 104, 106) ;
un récepteur pour la réception de signaux (108, 104, 106) ;
un vocodeur (132) pour la décompression des données vocales compressées reçues ;
un convertisseur numérique-analogique (134) pour la conversion des données vocales décompressées en un signal vocal analogique ;
un microprocesseur (110) ; et
des moyens (124) pour le stockage des messages reçus par le récepteur ; et
dans laquelle ledit microprocesseur (110), lorsqu'il est activé, est adapté pour arrêter la lecture d'un message en cours de réception et pour démarrer la relecture du message stocké dans lesdits moyens de stockage des messages (124) ;
et dans laquelle l'unité de communication sans fil bidirectionnelle portable ou mobile (100, 200, 300, 400) :
(i) est apte à recevoir et enregistrer un message, pendant un appel simplex, le message comprenant des données vocales ;
(ii) comprend un commutateur de relecture dédié (118) qui, lorsqu'il est actionné par un utilisateur, active le microprocesseur (110) de façon à arrêter la lecture (506) d'un message en cours de réception qui est lu en temps réel, et à commencer la relecture (508) du message depuis son début, en utilisant les données vocales stockées dans les moyens de stockage (124), tout en continuant d'enregistrer le message ; et
(iii) est apte à continuer la relecture (508), après un instant (t₃) auquel la réception (502) et l'enregistrement (504) du message ont pris fin, jusqu'à un instant (t₄) auquel le message complet a été relu.

2. Unité de communication sans fil bidirectionnelle portable ou mobile (100, 200, 300, 400) selon la revendication 1, dans laquelle les moyens de stockage de messages comprennent :
un premier tampon (126) pour la mise en mémoire tampon de données qui sont des données vocales compressées, avant leur délivrance au vocodeur (132) ;
un deuxième tampon (130) pour la mise en mémoire tampon de données qui sont des données vocales décompressées délivrées par le vocodeur (132), avant leur délivrance au convertisseur numérique-analogique (134) ; et
une mémoire (128) connectée aux premier et deuxième tampons et apte à enregistrer le message reçu.

3. Unité de communication sans fil bidirectionnelle portable ou mobile (100, 200, 300, 400) selon l'une quelconque des revendications précédentes, dans laquelle:
le microprocesseur (110) est adapté pour démarrer la transmission d'une notification indiquant que la relecture est activée ; et
l'unité (100, 200, 300, 400) est adaptée pour envoyer la notification à un expéditeur du message reçu, pour indiquer à l'expéditeur que toute réponse émanant de l'unité (100, 200, 300, 400) sera retardée.

4. Unité de communication sans fil bidirectionnelle portable ou mobile (100, 200, 300, 400) selon la revendication 3, dans laquelle :
l'unité (100, 200, 300, 400) est adaptée pour envoyer le message de notification après que la réception du message est terminée.

5. Unité de communication sans fil bidirectionnelle portable ou mobile (100, 200, 300, 400) selon l'une quelconque des revendications précédentes, dans laquelle:
l'unité (100, 200, 300, 400) est une radio TETRA, ou une radio APCO 25, ou une radio IDEN.

6. Procédé de fonctionnement d'une unité de communication sans fil bidirectionnelle portable ou mobile (100, 200, 300, 400) dans un système de réseau de radiocommunication numérique apte à prendre en charge des appels simplex, ledit procédé comprenant les étapes de :
réception d'un message comprenant des données vocales, par un récepteur de l'unité de communication sans fil bidirectionnelle portable ou mobile (100, 200, 300, 400) ;
enregistrement du message dans des moyens de stockage de messages (124) ; et
activation d'un microprocesseur (110) de l'unité de communication sans fil bidirectionnelle portable ou mobile (100, 200, 300, 400) de façon à arrêter la lecture du message en cours de réception et à démarrer la relecture du message stocké dans lesdits moyens de stockage des messages (124) ;
dans lequel :
(i) l'unité de communication sans fil bidirectionnelle portable ou mobile (100, 200, 300, 400) reçoit et enregistre un message, pendant un appel simple, le message comprenant des données vocales, et lit (506) le message en temps réel ;
(ii) un utilisateur actionne un commutateur de relecture dédié (118) pour activer le microprocesseur (110) de façon à arrêter la lecture (506) du message en temps réel par l'unité (100, 200, 300, 400), et à commencer la relecture (508) du message, en utilisant les données vocales stockées enregistrées par les moyens de stockage (124), tout en continuant d'enregistrer le message ;
(iii) l'unité de communication sans fil bidirectionnelle portable ou mobile (100, 200, 300, 400) continue la relecture (508), après un instant (t₃) auquel la réception (502) et l'enregistrement (504) du message ont pris fin, jusqu'à un instant (t₄) auquel le message complet a été relu.

7. Procédé selon la revendication 6, comprenant les étapes selon lesquelles :
le microprocesseur (110) de l'unité de communication sans fil bidirectionnelle portable ou mobile (100, 200, 300, 400) démarre la transmission d'une notification indiquant que la relecture est activée ; et
l'unité (100, 200, 300, 400) envoie la notification à un expéditeur du message reçu, pour indiquer à l'expéditeur que toute réponse émanant de l'unité (100, 200, 300, 400) sera retardée.

8. Procédé selon la revendication 7, comprenant les étapes selon lesquelles :
l'unité de communication sans fil bidirectionnelle portable ou mobile (100, 200, 300, 400) envoie le message de notification après que la réception du message est terminée.

9. Procédé selon la revendication 7 ou la revendication 8, dans lequel :
l'expéditeur du message et le récepteur de la notification se trouvent dans un centre téléphonique de services de police.

10. Procédé selon l'une quelconque des revendications 6 à 9, comprenant le fait que :
tout nouvel appel entrant est signalé lorsque la relecture est active.
